# EUROPEAN PATENT SPECIFICATION

(11) **EP 3 723 971 B1**
(45) Date of publication and mention of the grant of the patent: **15.06.2022**
(21) Application number: 18833317.3
(22) Date of filing: 13.12.2018
(51) Int. Cl.: B29D 30/24

(54) **FORMING DRUM FOR BUILDING A TYRE FOR VEHICLE WHEELS AND METHOD FOR CHECKING THE GEOMETRY OF A FORMING DRUM IN A PROCESS FOR BUILDING A TYRE FOR VEHICLE WHEELS**
FORMUNGSTROMMEL ZUM BAU EINES REIFENS FÜR FAHRZEUGRÄDER UND VERFAHREN ZUR ÜBERPRÜFUNG DER GEOMETRIE EINER FORMUNGSTROMMEL IN EINEM VERFAHREN ZUM BAU EINES REIFENS FÜR FAHRZEUGRÄDER
TAMBOUR DE FORMAGE POUR LA CONSTRUCTION D'UN PNEU DESTINÉ À DES ROUES DE VÉHICULE ET PROCÉDÉ DE VÉRIFICATION DE LA GÉOMÉTRIE D'UN TAMBOUR DE FORMAGE DANS UN PROCÉDÉ DE CONSTRUCTION D'UN PNEU DESTINÉ À DES ROUES DE VÉHICULE

(30) Priority: 13.12.2017 IT 201700143550
(43) Date of publication of application: 21.10.2020
(73) Proprietor: Pirelli Tyre S.p.A., 20126 Milano (IT)
(72) Inventor: MANCINI, Gianni, 10141 Torino (IT); DE COL, Christian, 20126 Milano (IT)
(74) Representative: Porta & Consulenti Associati S.p.A.
(86) International application number: PCT/IB2018/059996
(87) International publication number: WO 2019/116292

(56) References cited:
- US-A- 3 077 918
- US-A1- 2009 229 752
- US-A1- 2014 367 048

## Description

The present invention relates to a forming drum for tyres for vehicle wheels and a method for controlling the geometry of a forming drum in a process for building a tyre for vehicle wheels.

More in particular, the invention relates to a forming drum used in building a green tyre, to subsequently be subjected to a molding and vulcanization cycle to obtain the end product, and a method for moving such a drum.

A tyre for vehicle wheels generally comprises a carcass structure comprising at least one carcass ply formed from reinforcing cords incorporated in a matrix of elastomeric material. The carcass ply has end edges respectively engaged with annular anchoring structures. The latter are arranged in the areas of the tyre usually identified with the name "beads" and are normally each formed from a substantially circumferential annular insert on which at least one filling insert is applied, in radially outer position. Such annular inserts are commonly identified as "bead cores" and have the task of keeping the tyre properly fixed to the anchoring seat suitably provided in the rim of the wheel, thus preventing the radially inner end edge of the tyre from coming out from such a seat during operation.

At the beads there can be specific reinforcing structures having the function of improving the transmission of torque to the tyre.

In "tubeless" tyres, an airtight coating layer, usually called "liner", covers the inner surfaces of the tyre.

In radially outer position with respect to the carcass structure, a crown structure is associated.

The crown structure comprises a belt structure and, in radially outer position with respect to it, a tread band made of elastomeric material.

The belt structure comprises one or more belt layers, arranged radially overlapping one another and having textile or metallic reinforcing cords having crossed-over orientation and/or substantially parallel to the direction of circumferential extension of the tyre (zero degrees layer).

Between the carcass structure and the belt structure there can be a layer made of elastomeric material, called "underbelt", having the function of making the radially outer surface of the carcass structure as uniform as possible for the subsequent application of the belt structure.

Between the belt structure and the tread band it is possible to arrange a so-called "underlayer" made of elastomeric material of suitable properties to obtain a stable union of the tread band with the belt structure.

On the side surfaces of the carcass structure, each extending from one of the side edges of the tread band up to the respective annular anchoring structure to the beads, respective sidewalls made of elastomeric material are applied.

The carcass structure, generally in the form of a sleeve, and the belt or crown structure are generally made separately from one another in respective work stations, to then be assembled together in a subsequent step.

The expression "elastomeric material" is meant to indicate a composition comprising at least one elastomeric polymer and at least one reinforcing filler. Preferably, such a composition also comprises additives like, for example, a cross-linking agent and/or a plasticizer. Thanks to the presence of the cross-linking agent, such a material can be cross-linked through heating, so as to form the final manufactured product.

The terms "radial" and "axial" are used with reference, respectively, to a direction parallel and perpendicular to a middle plane of a forming drum used in building the tyre, such a middle plane being perpendicular to a rotation axis of the forming drum. The expressions "radially inner/outer" respectively indicate a position closer to or further from the aforementioned rotation axis of the forming drum. The expressions "axially inner/outer" respectively indicate a position closer to and further from the aforementioned middle plane.

The terms "circumferential" and "circumferentially", on the other hand, are used with reference to the annular extension of the aforementioned forming drum.

The term "radial section of a forming drum" is meant to indicate a section taken on a plane on which the rotation axis thereof lies.

The expression "substantially continuous surface" is meant to indicate a surface that can be crossed in any direction without encountering interruption or empty areas or areas in which the interruption or empty areas have an extension of less than 20% with respect to the entire surface.

The expression "non-lowered-profile tyre" is meant to indicate a tyre having a height of the sidewalls greater than or equal to 55% of the nominal width of the radial section thereof.

EP 2572872A1 describes applying the belt structure of a tyre on a carcass structure shaped and supported by a forming drum arranged inside it. In the forming drum there is a central forming group having a first series of forming plates and a second series of forming plates that in an expanded condition match one another to define a continuous surface of 360° that supports the carcass structure. The plates of the first series are alternated with the plates of the second series and, in a contracted condition, the plates of the first series are positioned radially inside the plates of the second series. A first ring concentric to the rotation axis of the drum is set in motion by a dedicated electric motor. The first ring is connected to a series of kinematic mechanisms each of which is dedicated to the movement of one of the plates of the first series of plates. A second ring concentric to the rotation axis of the drum is set in motion by a dedicated electric motor. The second ring is connected to a series of kinematic mechanisms each of which is dedicated to the movement of one of the plates of the second series of plates. The two series of plates move independently from one another. The aforementioned document is specifically aimed at building tyres for two-wheeled vehicles the fitting diameter of which can be 16, 16.5 and 17 inches, in which depending on the predetermined diameter different sized forming plates are used. The positioning of a substantially cylindrical carcass structure on the forming drum and the toroidal shaping of the carcass structure is also described. Thereafter, two belt layers can be applied to the carcass structure and a tread band can be further applied to build a green tyre.

Document WO 2016/157001A1 to the same Applicant describes a shaping station in which a carcass sleeve is coupled with a toroidal substantially rigid and expandable forming drum, arranged inside the carcass sleeve itself.

The forming drum is expandable between a radially contracted condition and a radially expanded condition and comprises a plurality of sectors circumferentially distributed around a central shaft coaxial to a geometric rotation axis of the drum itself.

In the expanded condition the set of sectors of the forming drum defines, along its circumferential extension, a radially outer abutment surface, toroidally shaped according to the inner configuration that the carcass sleeve must take up when shaping is complete.

Each of the sectors has a first coupling portion and a second coupling portion that are circumferentially opposite, interconnected through an intermediate portion that has a substantially circumferential direction of extension. Each of the coupling portions has a plurality of elongated projections extending in a circumferential direction from the intermediate portion alternating with respective circumferentially elongated cavities.

In the contracted condition of the forming drum, the projections of each sector penetrate in the respective cavities until they touch or almost touch the intermediate portion of the adjacent sector.

In the expanded condition of the forming drum, the projections are extracted from the cavities according to an amount at least equal to 80% of their length.

The Applicant has realized that there is a need to arrange a carcass structure on a forming drum and thereafter to build a belt or crown structure on the carcass structure arranged and shaped on said forming drum also when building tyres that have a high difference between fitting diameter and rolling diameter, like for example tyres of sport utility vehicles (SUV) and, more generally, tyres with non-lowered-profile sidewalls.

The Applicant has observed that the forming drum described in document WO 2016/157001A1 would make it possible to build tyres having high differences in diameter between fitting diameter and rolling diameter. However, the radially outer surface of such a forming drum, in the expanded condition, has circumferential rows of solid portions, defined by the projections, interposed with void portions of comparable size to the solid portions, defined by the cavities.

The Applicant has observed that such circumferential rows of solid portion interposed with void portions would for example make the rolling operations not very efficient, during which the belt or crown structure is subjected to radial thrusts to make it adhere to the carcass structure.

The Applicant has indeed observed that the carcass structure, under the radial thrust exerted during the rolling operations (or during other building steps), would not be adequately supported and would tend to form wrinkles (even if minimal) at the void portions with possible formations of defects.

The Applicant has observed that the forming drum described in document EP 2572872A1 makes it possible to effectively support the carcass structure during the building operations by virtue of the geometry of its annular radially outer surface when the forming drum is in the expanded condition.

The Applicant has however observed that forming drums of the type described in EP 2572872A1 are aimed at building tyres for two-wheeled vehicles with fitting diameter comprised between 16 and 17 inches and such a type of tyre has differences in diameter between fitting diameter and rolling diameter that are very low, at least not comparable with the requirements of the Applicant.

The Applicant has realized that in building tyres that have a high difference between fitting diameter and rolling diameter, like for example tyres of sport utility vehicles (SUV) and, more generally, tyres with non-lowered-profile sidewalls, it is advantageous to have forming drums with high radial expandability and having a substantially continuous annular surface in expanded condition so as to be able to support the carcass structure shaped during the building directly on it of one or more belt layers, of the belt structure or more generally of the entire crown structure, to obtain the green tyre.

The Applicant has also realized that it would be possible to obtain high radial expandability by reducing as much as possible, for the same diameter of the drum in expanded condition, the diameter of the drum when in the contracted condition.

More precisely, in the Applicant's opinion such a geometric condition could be reached through the use of at least two pluralities of sectors having distinct geometry, controlled by kinematic mechanisms such as to allow a mutually synchronous movement in both the expansion and contraction steps.

The Applicant has finally found that the provision of first sectors and second sectors that are radially expandable between a contracted condition, in which the sectors are brought towards a central shaft of the drum and in which the second sectors are radially more inner than the first sectors, and an expanded condition, in which the sectors are moved away from the central shaft of the drum and in which the first sectors are circumferentially aligned and interspersed with the second sectors and the provision of a kinematic mechanism that directly connects the first sectors to the second sectors making it possible to transmit the motion of the first sectors to the second sectors, makes it possible to obtain a substantially continuous annular surface in the condition of maximum radial expansion of the forming drum.

At the same time, this makes it possible to limit the radial space necessary to house the movement devices when the drum is in the contracted condition, allowing the first and the second sectors to reach radial positions closer to the central shaft when the drum is in the contracted condition.

The present invention therefore relates, in a first aspect, to a forming drum for building a tyre for vehicle wheels.

Preferably, a central shaft is provided concentric to a geometric rotation axis of the forming drum.

Preferably, there are first sectors radially mobile between a contracted condition in which said first sectors are brought towards said central shaft and an expanded condition in which said first sectors are radially moved away from said central shaft.

Preferably, there are second sectors radially mobile between a contracted condition in which said second sectors are brought towards said central shaft and an expanded condition in which said second sectors are radially moved away from said central shaft.

Preferably, there are radial movement devices active between said central shaft and the first sectors to move the first sectors between the contracted condition and the expanded condition and vice-versa.

Preferably, there are kinematic mechanisms active between said first sectors and said second sectors that kinematically connect the first sectors and the second sectors to radially move the second sectors between the contracted condition and the expanded condition when the first sectors move radially between the contracted condition and the expanded condition and to move the second sectors between the expanded condition and the contracted condition when the first sectors move between the expanded condition and the contracted condition.

Preferably, it is foreseen for said first sectors and said second sectors to be circumferentially aligned when said first sectors and second sectors are in the respective expanded conditions to define a substantially continuous annular surface and for said second sectors to be radially inner with respect to said first sectors when said first sectors and second sectors are in the respective contracted conditions.

The Applicant deems that the forming drum according to the invention makes it possible to build the belt structure or the entire crown structure also of tyres that have a high difference between fitting diameter and rolling diameter on the carcass structure shaped and supported by the aforementioned drum, since the geometry of the radially outer surface of the aforementioned forming drum also in conditions of high expansion remains substantially continuous.
The present invention relates, in a second aspect, to a method for controlling the geometry of a forming drum in a process for building a tyre for vehicle wheels.

Preferably, it is foreseen to provide radially mobile first sectors and to provide radially mobile second sectors.

Preferably, it is foreseen to kinematically connect the second sectors to the first sectors.

Preferably, it is foreseen to provide radial movement devices and kinematically link said radial movement devices to the first sectors.

Preferably, it is foreseen to activate said radial movement devices to move said first sectors between a contracted condition in which they have a minimum radial bulk and an expanded condition in which they have a maximum radial bulk and vice-versa

Preferably, the movement of said first sectors sets said second sectors in motion between a contracted condition in which said second sectors are radially inner with respect to said first sectors and an expanded condition in which said second sectors are circumferentially aligned with said first sectors.

The present invention, in at least one of the aforementioned aspects, can have at least one of the preferred features described hereinafter.

Preferably, said kinematic mechanisms move said second sectors.

Preferably, said second sectors move from the expanded condition to the contracted condition at a greater radial speed than a radial speed at which said movement devices move said first sectors from the expanded condition to the contracted condition.

In this way, the second sectors can reach radially inner positions with respect to the first sectors and thus allow the first sectors to circumferentially approach one another until they are circumferentially adjacent when in the contracted condition. At the same time the second sectors can circumferentially approach one another until they are circumferentially adjacent when in the contracted condition.

Preferably, said second sectors move from the contracted condition to the expanded condition at a greater radial speed than a radial speed at which said movement devices move said first sectors from the contracted condition to the expanded condition.

In this way, during the radial expansion of the first sectors, the second sectors can insert into the circumferential space that is created between two circumferentially consecutive first sectors. Moreover, the greater speed of radial expansion of the second sectors with respect to the first sectors allows the first and the second sectors to reach the respective expanded conditions substantially at the same moment.

Preferably, said kinematic mechanisms comprise first axes oriented in an axial direction, for each second sector being defined a respective first axis; said first axes translating radially with respect to said first sectors and always remaining the same radial distance from the respective second sector when said movement devices move said first sectors.

Preferably, said kinematic mechanisms comprise second axes oriented in an axial direction, for each first sector being defined a respective second axis; said second axes always remaining the same radial distance from the respective first sector and always remaining radially external with respect to said first axes.

In this way, the radial translation of the first sectors is determined by the axial translation of the second axes and the radial translation of the second sectors is determined by the radial translation of the first axes. By kinematically connecting the first axes to the second axes it is possible to move the second sectors through the movement imparted on the first sectors.

Preferably, said kinematic mechanisms connect each sector of the second sectors to respective two first sectors circumferentially consecutive to one another.

In this way, the kinematic mechanisms interconnect all of the first sectors to all of the second sectors. Moreover, in this way the kinematic mechanisms do not directly connect each first sector to another first sector but such connection is indirect through the interposition of a second sector. Similarly, in this way the kinematic mechanisms do not directly connect each second sector to another second sector but such a connection is indirect through the interposition of a first sector.

Preferably, said kinematic mechanisms comprise pairs of connecting rods in which a first connecting rod and a second connecting rod of each pair of connecting rods are hinged together and each hinged to a respective first sector.

Preferably, each second sector is hinged to a first connecting rod of a pair of connecting rods and to a second connecting rod of a circumferentially consecutive pair of connecting rods.

In this way, the connecting rods make a preferred example of kinematic connection between the first and the second sectors capable of actuating the latter through the movement of the first sectors.

Preferably, a first connecting rod of a pair of connecting rods and a second connecting rod of a circumferentially consecutive pair of connecting rods are hinged together about a respective first axis.

Preferably, said kinematic mechanisms comprise second shelves each of which is connected to a respective second sector and is hinged to a first connecting rod of a pair of connecting rods and to a second connecting rod of a circumferentially consecutive pair of connecting rods about a respective first axis.

In this way, the second shelves allow the hinging of the connecting rods to the second sectors.

Preferably, the first connecting rod and the second connecting rod of a same pair of connecting rods are hinged to a first sector about a respective second axis.

Preferably, said kinematic mechanisms comprise telescopic rods each of which extends from the central shaft to a respective second sector.

The telescopic rods make a further constraint for the second sectors preventing them from rotating with respect to one another and with respect to the first sectors. Moreover, the telescopic rods stiffen the entire structure of the drum giving it stability even with the substantial radial expansions reached.

Preferably, each first sector comprises first circumferentially opposite ends provided with first projections alternating with first cavities; the first projections of a first sector being inserted in the first cavities of circumferentially adjacent first sectors when the first sectors and the second sectors are in the contracted condition.

This makes it possible to reduce the radial bulk of the first sectors when in contracted condition.

Preferably, each second sector comprises second circumferentially opposite ends provided with second projections alternating with second cavities; the second projections of a second sector being moved away from the second cavities of circumferentially adjacent second sectors when the first sectors and the second sectors are in the contracted condition.

In this way, circumferential openings are created between the second sectors when in the contracted condition to allow the kinematic mechanisms to reach the first sectors that, as stated, when in the contracted condition are arranged radially outside of the second sectors.

Preferably, the first projections of two circumferentially consecutive first sectors are inserted in respective second cavities of a second sector circumferentially arranged between said two first sectors for at least 25% of the circumferential extension of the first projections when the first sectors and the second sectors are in the expanded condition.

In this way, when the first and the second sectors are in the expanded condition only small openings are created on the outer surface of the drum with a substantial reduction of the radial bulk of the drum when the first sectors are in the contracted condition.

Preferably, the second projections of two circumferentially consecutive second sectors are completely inserted in respective first cavities of a first sector circumferentially arranged between said two second sectors when the first sectors and the second sectors are in the expanded condition.

Preferably, the second cavities of the second sectors are completely occupied by the first projections of the first sectors when the first sectors and the second sectors are in the expanded condition.

Preferably, the second projections of the second sectors have a smaller circumferential extension than the first projections of the first sectors.

Preferably, each first sector comprises a first central portion that extends between said first circumferentially opposite ends, said first central portion having a continuous radially outer surface in which the ratio between the extension in the circumferential direction of said continuous radially outer surface and the circumferential extension of a first projection of the first sector is greater than, or equal to, about 2.

In this way, the first projections and the first cavities allow a substantial reduction of the radial bulk of the drum when the first sectors are in the contracted configuration.

Preferably, each second sector comprises a second central portion that extends between said second circumferentially opposite ends, said second central portion having a continuous radially outer surface in which the ratio between the extension in the circumferential direction of said continuous radially outer surface and the circumferential extension of a second projection of the second sector is greater than, or equal to, about 2.

The second projections make it possible to fill the first cavities when the first sectors and the second sectors are in the expanded condition, contributing to making an outer surface of the drum that is as continuous as possible.

Preferably, said radial movement devices comprise control levers each hinged to one of said first sectors and to at least one control collar associated with said control levers and slidably fitted on said central shaft.

The control levers actuate the first sectors to move them between the contracted condition and the expanded condition and vice-versa when the control collar is actuated.

Preferably, said control collar is axially slidable along said central shaft to simultaneously and radially move said control levers.

In this way, depending on the axial direction in which the control collar is slid, the control levers push the first sectors in a radially outer direction or pull the first sectors in a radially inner direction.

Preferably, said movement devices also comprise telescopic guide devices each of which is associated with a respective control lever to guide said control levers in the radial direction during the axial sliding of said control collar.

The telescopic guide devices accompany the control levers during their movement, giving the latter greater stability and structural rigidity.

Preferably, each first sector comprises two first axially outer edges having a profile inclined towards said central shaft.
Preferably, each second sector comprises two second axially outer edges having a profile inclined towards said central shaft.

In this way it is possible to match the shape of the tyre while it is being built.

Preferably, the difference between the maximum bulk in the radial direction of the drum when the first sectors and the second sectors are in expanded condition and the maximum bulk in the radial direction of the drum when the first sectors and the second sectors are in contracted condition is at least 120mm.

Preferably, said second sectors are in the contracted condition when the first sectors are in the contracted condition and in which said second sectors are in the expanded condition when the first sectors are in the expanded condition.

Preferably, providing said first sectors comprises providing first projections alternating with first cavities on first circumferentially opposite ends of each first sector.

Preferably, providing said second sectors comprises providing second projections alternating with second cavities on second circumferentially opposite ends of each second sector.

Preferably, it is foreseen to insert the first projections of a first sector in the first cavities of circumferentially adjacent first sectors when the first sectors are in the contracted condition.

Preferably, it is foreseen to insert the first projections of two circumferentially consecutive first sectors in respective second cavities of a second sector for at least 25% of the circumferential extension of the first projections when the first sectors and the second sectors are in the expanded condition.

Further features and advantages of the present invention will become clearer from the following detailed description of preferred embodiments thereof, made with reference to the attached drawings.

In such drawings:
- figure 1 is a schematic perspective view of a forming drum for tyres for vehicle wheels in accordance with the present invention, such a drum being illustrated in a first operative condition thereof;
- figure 2 is a schematic perspective view of the drum of figure 1 in a second operative condition thereof;
- figure 3 is a schematic front view of the drum of figure 1 in the first operative condition;
- figure 4 is a schematic front view of the drum of figure 1 in the second operative condition;
- figure 5 is an enlarged perspective view of some details of the drum of figure 1 in the first operative condition;
- figure 6 is an enlarged perspective view of some details of the drum of figure 2 in the second operative condition;
- figure 7 is a schematic perspective view of the drum of figure 2 in the second operative condition with some parts removed to better highlight others;
- figure 8 is a schematic front view of the drum of figure 1 in the first operative condition with some parts removed to better highlight others;
- figure 9 is a schematic front view of the drum of figure 2 in the second operative condition with some parts removed to better highlight others;
- figures 10 and 11 are schematic perspective views of some details of the drum of figure 1;
- figure 12 is a schematic perspective view of the drum of figure 1 in the first operative condition with some parts removed to better highlight others; and
- figure 13 is a perspective view of some details of the drum of figure 2.

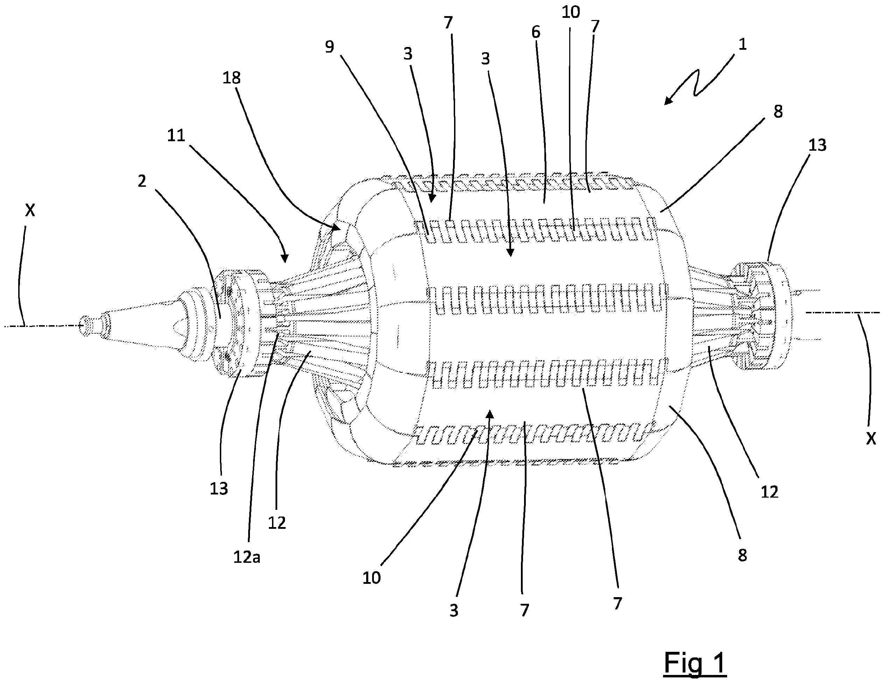

In figures 1-13, reference numeral 1 wholly indicates a forming drum for tyres for vehicle wheels in accordance with the present invention.

The drum 1 comprises a central shaft 2 having axial extension crossed by a geometric axis X about which the drum 1 rotates.

In radially outer position with respect to the central shaft 2 there is a plurality of first sectors 3 which are mobile in the radial direction away from and towards the central shaft 2.

Each first sector 3 comprises a first radially outer surface 4 and a first radially inner surface 5 opposite the first radially outer surface 4.

Each first sector comprises a first central portion 6 delimited by first opposite ends 7 in the circumferential direction and by first axially outer and mutually opposite edges 8.

The first central portion 6 has a substantially cylindrical sector shaped extension, in other words a curved extension with constant radius of curvature, in which a hypothetical generatrix of the cylinder is parallel to the geometric axis X.

The first axially outer edges 8 have an arched progression inclined towards the geometric axis X, as represented in figure 1.

On each first end 7 there are first projections 9 alternating with first cavities 10. The first projections 9 have a substantially flat extension and extend tangentially away from the first central portion 6 of the respective first sector 3. The first cavities 10 are arranged between two consecutive first projections 9, making a comb teeth structure.

The extension in the axial direction of each first projection 9 is identical to the extension in the axial direction of each first cavity 10. All of the first projections 9 and all of the first cavities 10 have the same extension in the axial direction.

The first projections 9 of a first end 7 are circumferentially aligned with the first cavities 10 of the opposite first end 7 of the same first sector 3. In other words, the first projections 9 of a first end 7 are axially offset with respect to the first projections 9 of the opposite first end 7 by an amount equal to the extension in the axial direction of a first projection 9.

All of the first projections 9 have the same extension in the circumferential direction. The ratio between the extension in the circumferential direction of the first central portion 6 and a first projection 9 is greater than or equal to about 2, preferably greater than 3, more preferably about 4.4.

In the preferred embodiment of the invention, the drum 1 comprises twelve first sectors 3 that are identical to one another.

On the first sectors 3 radial movement devices 11 are active, configured to be actuated by respective actuators.

The movement devices 11 are directly active only on the first sectors 3.

The radial movement devices 11 comprise a plurality of control levers 12 each of which is hinged, at its own first end 12a, to a control collar 13 slidably fitted onto the central shaft 2.

Preferably, there are two control collars 13 arranged on the central shaft in axially opposite positions and slidable along opposite axial directions. Respective control levers 12 are hinged on each control collar 13.

Each control collar 13 is operatively connected to a threaded bar (not illustrated) rotatably engaged coaxially inside the central shaft 2. The threaded bar extends along the central shaft 2 and is engaged by nut screws each of which is connected to one of the control collars 13. The rotation of the threaded bar in the central shaft 2 determines an axial movement of the nut screws in opposite axial directions and a corresponding rotation of the control collars 13.

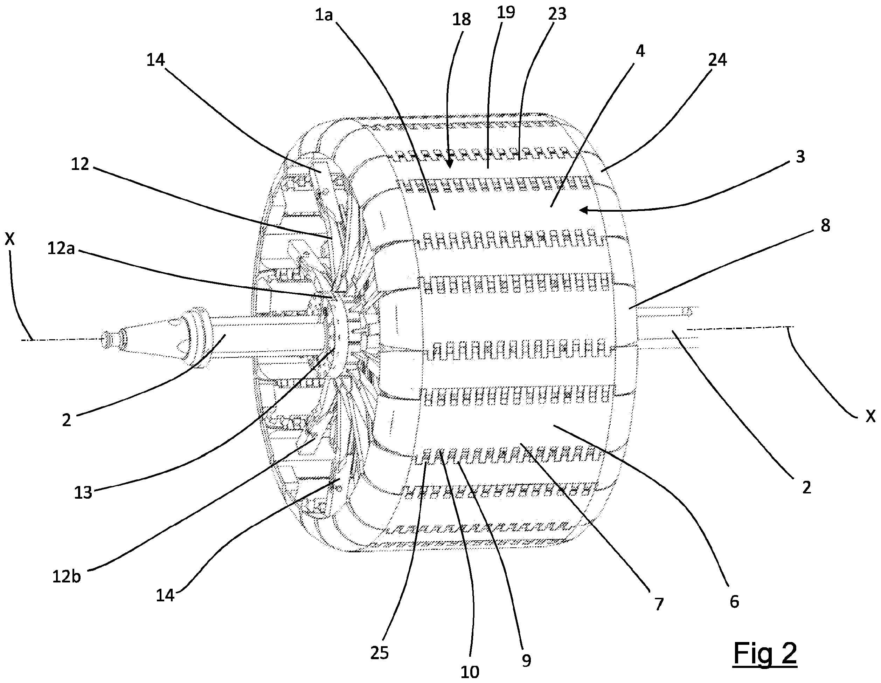

Each control lever 12 is hinged, at a second end 12b opposite to the first end 12a, to a slider 14 fixedly connected to a respective first sector 3, as illustrated in figure 2.

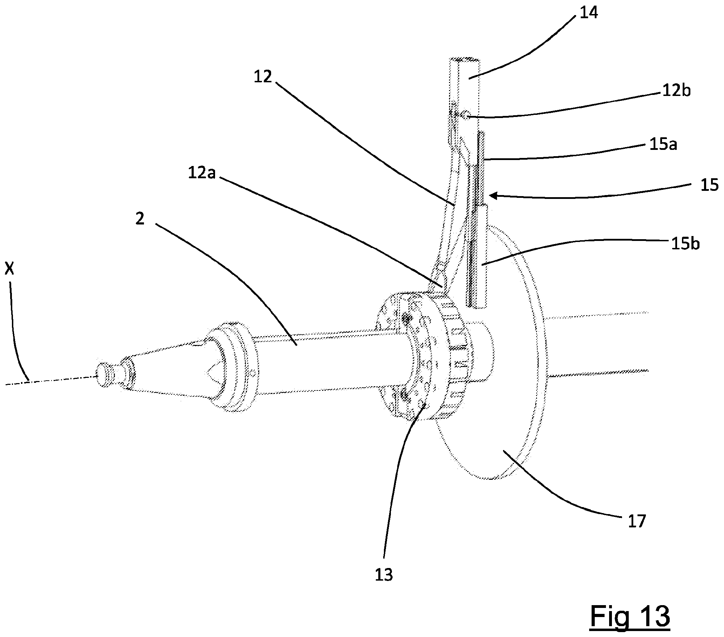

As better illustrated in figure 13 (in which a single control lever 12 is illustrated for the sake of clarity of presentation), the slider 14 is slidably mounted on a telescopic guide 15. The telescopic guide 15 is oriented and acts in the radial direction to extend and contract. Concerning this, the telescopic guide 15 comprises a first half-part 15a fixedly connected to the slider 14 and a second half-part 15b fixedly connected to a plate 17 fitted onto the central shaft 2. The first half-part 15a of the telescopic guide is slidably coupled with the second half-part 15b to be able to be inserted and extracted (partially) from the second half-part 15b.

The activation of the radial movement devices 11 determines a translation of each first sector 3 in the radial direction between a contracted condition (illustrated in figure 1) and an expanded condition (illustrated in figure 2).

With particular reference to figure 1, when the first sectors 3 are in the contracted condition, the first sectors 3 are circumferentially adjacent to one another and the drum 1 takes up a configuration of minimum radial bulk.

In the contracted condition of the first sectors 3, the telescopic guide 15 is in the contracted condition.

In this condition, the first projections 9 of a first sector 3 penetrate in the first cavities 10 of two circumferentially adjacent first sectors 3.

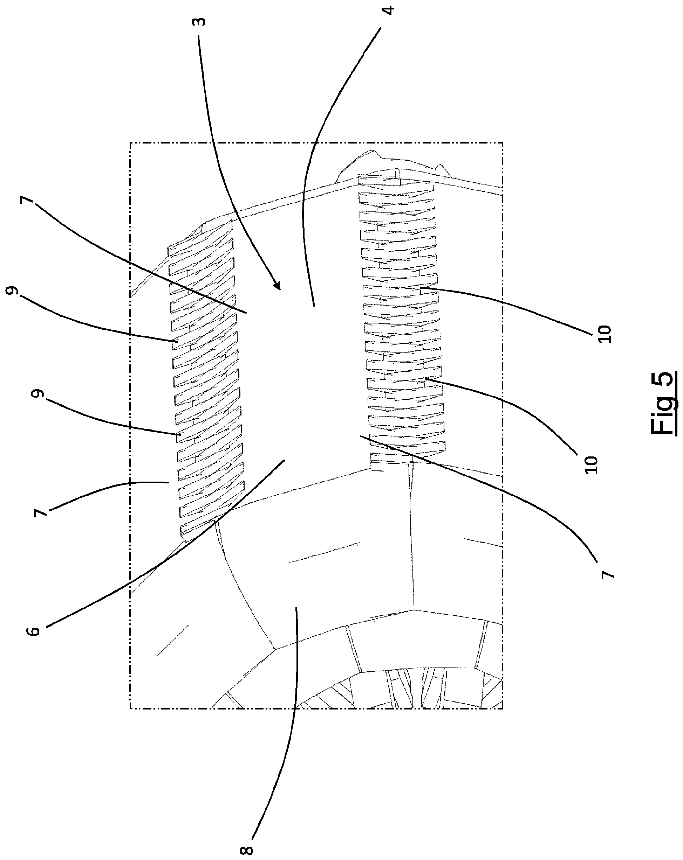

As better illustrated in figure 5, in the contracted condition of the first sectors 3, the first projections 9 of a first sector 3 completely penetrate into the first cavities 10 of two circumferentially adjacent first sectors 3 and extend beyond the first cavities 10 partially riding over the first central portions 6 of said two circumferentially adjacent first sectors 3. It should be noted that the portions of the first projections 9 that ride over the first central portions 6 extend radially outside of the central portions 6, since, as stated, the first projections 9 extend in the tangential direction from the first ends 7 of each first sector 3.

The drum 1 also comprises a plurality of second sectors 18 also mobile in the radial direction away from and towards the central shaft 2.

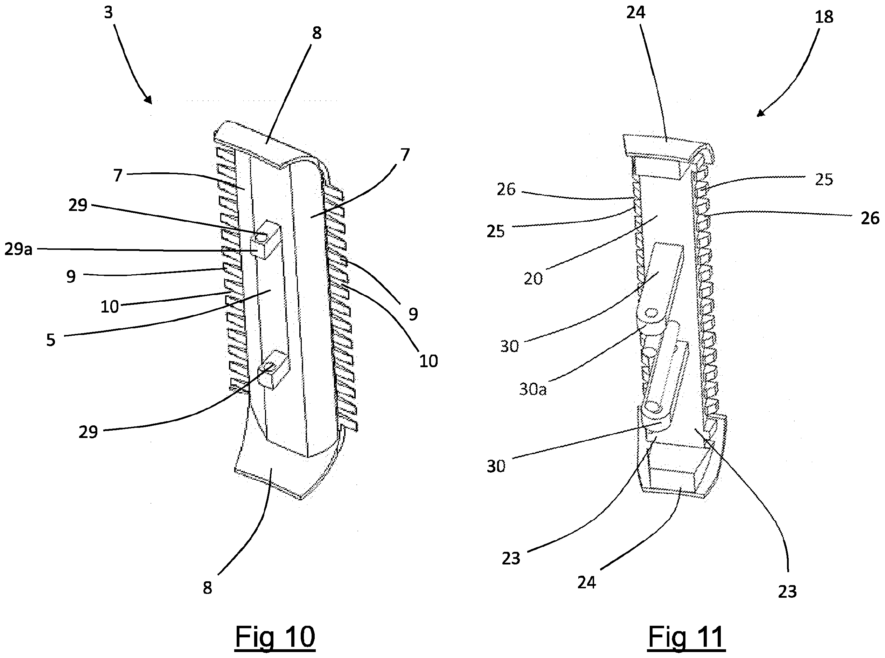

Each second sector 18 comprises a second radially outer surface 19 and a second radially inner surface 20 opposite the second radially outer surface 19 (figure 11).

Each second sector 18 comprises a second central portion 22 delimited by second opposite ends 23 in the circumferential direction and by second axially outer and mutually opposite edges 24.

The second central portion 22 has a substantially cylindrical sector shaped extension, in other words a curved extension with constant radius of curvature, in which a hypothetical generatrix of the cylinder is parallel to the geometric axis X. The radius of curvature of the second central portion 22 of the second sectors 18 is preferably equal to the radius of curvature of the first central portion 6 of the first sectors 3.

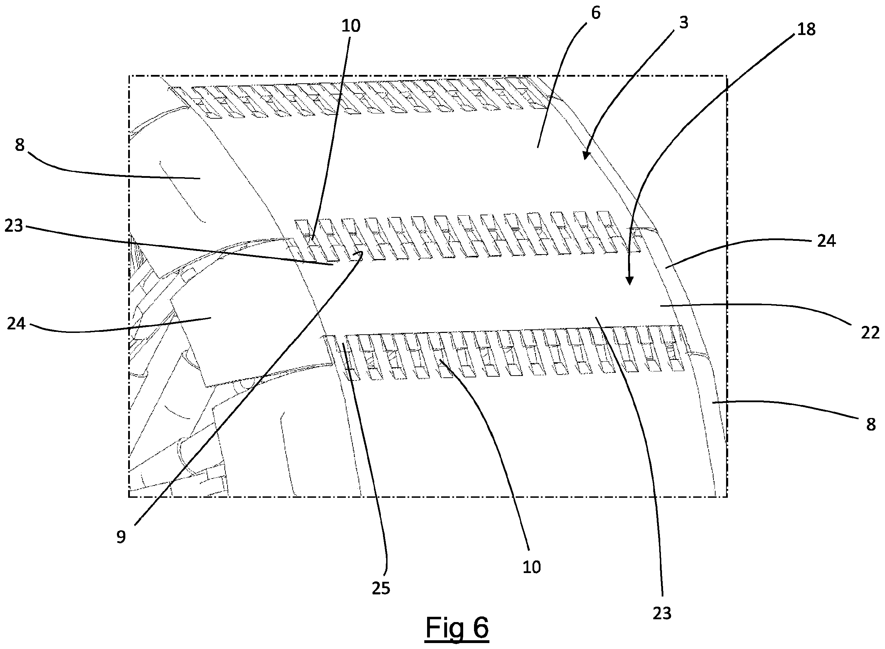

The second axially outer edges 24 have an arched progression inclined towards the geometric axis X, as for example represented in figure 6.

On each second end 23 there are second projections 25 alternating with second cavities 26 (see for example figure 11). The second projections 25 have a substantially flat extension and extend away, preferably in a tangential direction, from the second central portion 22 of the respective second sector 18. The second cavities 26 are arranged between two consecutive second projections 25, making a comb teeth structure.

The extension in the axial direction of each second projection 25 is identical to the extension in the axial direction of each second cavity 26. All of the second projections 25 and all of the second cavities 26 have the same extension in the axial direction.

The second projections 25 of a second end 23 are circumferentially aligned with the second cavities 26 of the second opposite end 23 of the same second sector 18. In other words, the second projections 25 of a second end 23 are axially offset with respect to the second projections 25 of the second opposite end 23 by an amount equal to the extension in the axial direction of a second projection 25.

All of the second projections 25 have the same extension in the circumferential direction. The ratio between the extension in the circumferential direction of the second central portion 22 and a second projection 25 is greater than or equal to about 2, preferably greater than 3, more preferably about 4.5.

The second projections 25 preferably have an extension in the circumferential direction of at least 25%, preferably about 30%, of the extension in the same direction of the first projections 9.

In the preferred embodiment of the invention, the drum 1 comprises twelve second sectors 18 that are identical to one another.

In any case, the number of second sectors 18 is identical to the number of first sectors 3.

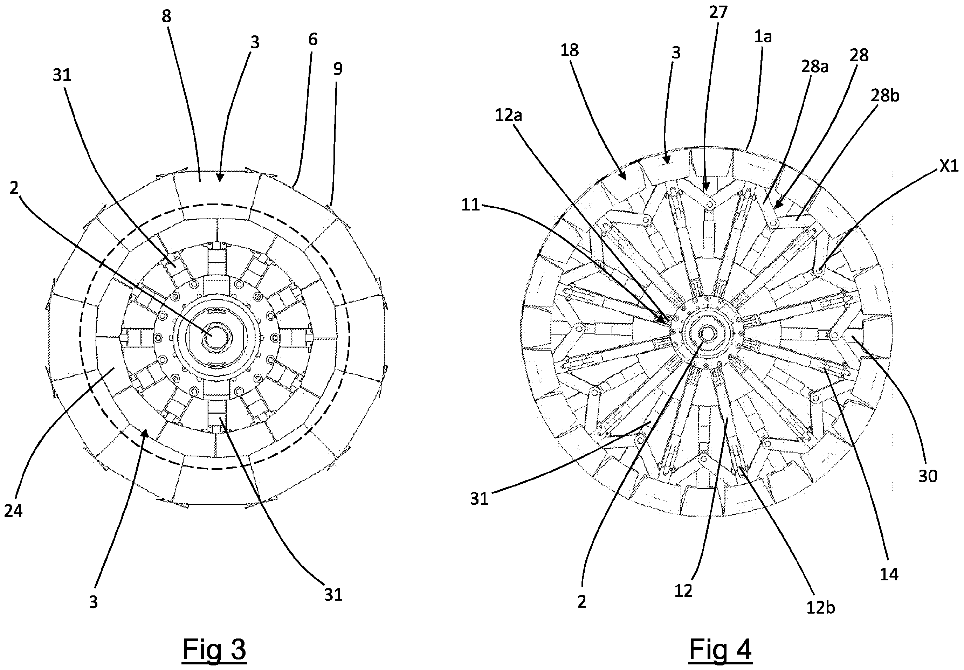

The second sectors 18 are kinematically connected to the first sectors 3 through kinematic mechanisms 27 that allow the second sectors 18 to move radially between a contracted condition (illustrated in figures 1 and 3) and an expanded condition (illustrated in figures 2 and 4) and vice-versa when the radial movement devices 11 move the first sectors 3 between the contracted condition and the expanded condition and vice-versa.

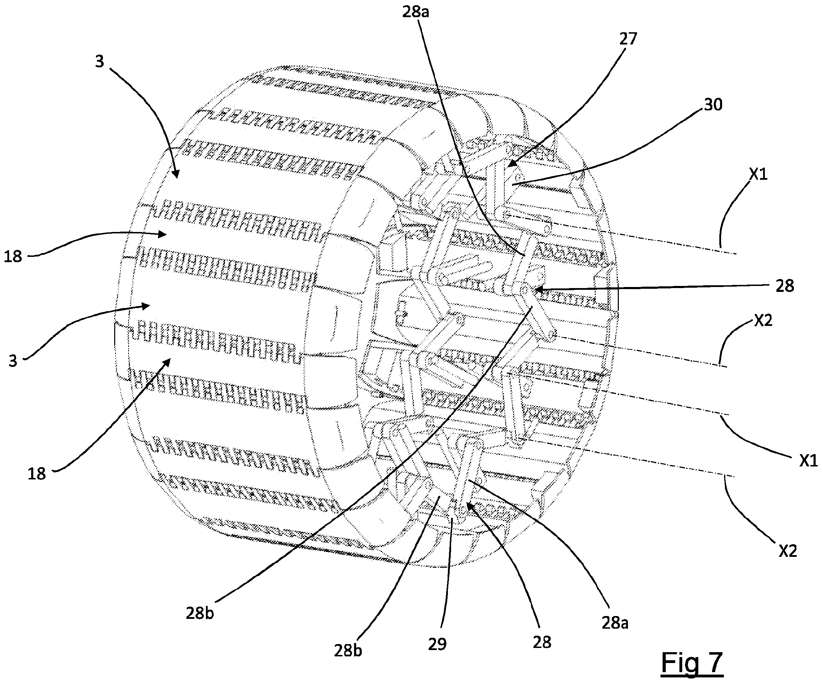

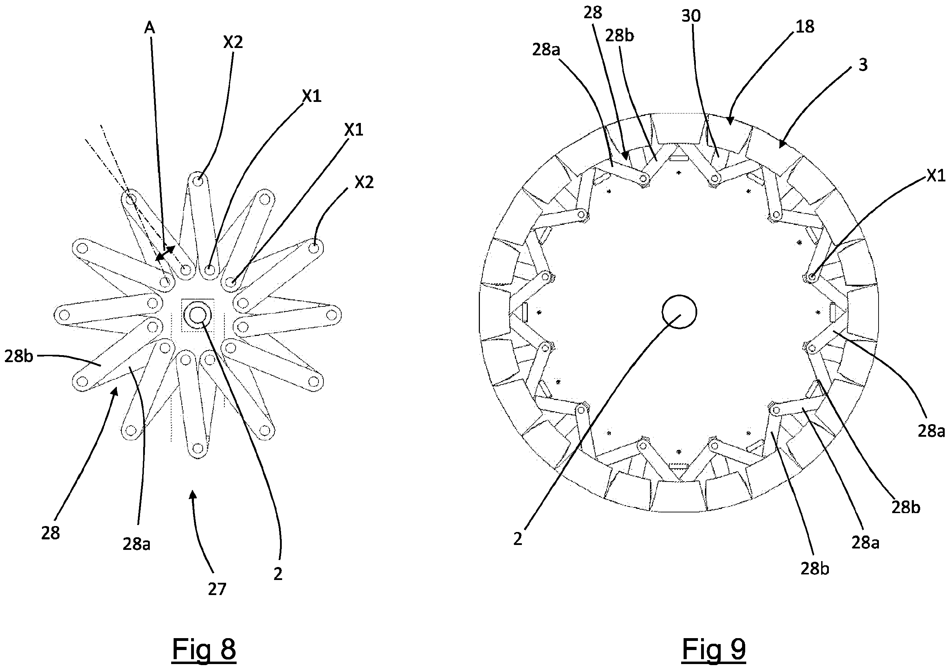

The kinematic mechanisms 27 mechanically connect the first sectors 3 to the second sectors 18 and in particular connect each second sector 18 to two circumferentially consecutive first sectors 3. The kinematic mechanisms 27 also connect each first sector 3 to two respective circumferentially consecutive second sectors 18, as shown in figures 7 and 9.

In the preferred embodiment of the invention, each kinematic mechanism 27 comprises pairs of connecting rods 28 in which a first connecting rod 28a and a second connecting rod 28b of each pair of connecting rods 28 are hinged together and each hinged to a respective first sector 3.

For this purpose, each first sector 3 comprises a first shelf 29 having radial extension that projects from the radially inner surface 5 thereof (figure 10) and that has a first radially inner free end 29a. First connecting rods 28a and second connecting rods 28b of two pairs of circumferentially consecutive connecting rods 28 are hinged to the shelf 29 at the radially inner free end 29a thereof, as illustrated in figure 7.

Each hinging point between a first connecting rod 28a and a second connecting rod 28b of a same pair of connecting rods 28 is crossed by a respective second axis X2 of the kinematic mechanism 27 directed in the axial direction. The second axes X2 are in equal number to the number of pairs of connecting rods 28 of each kinematic mechanism 27.

The first connecting rods 28a and the second connecting rods 28b of two pairs of circumferentially consecutive connecting rods 28 are also hinged to a second sector 18.

Each hinging point between a first connecting rod 28a and a second connecting rod 28b of two pairs of circumferentially consecutive connecting rods 28 is crossed by a respective first axis X1 of the kinematic mechanism 27 directed in the axial direction. The first axes X1 are in equal number to the number of pairs of connecting rods 28 of each kinematic mechanism 27.

The first axes X1 are parallel to one another and parallel to the second axes X2.

For this purpose, each second sector 18 comprises a second shelf 30 having radial extension that projects from the radially inner surface 20 thereof (figure 11) and that has a first radially inner free end 30a. The first connecting rods 28a and second connecting rods 28b of two pairs of circumferentially consecutive connecting rods 28 are hinged to the second shelf 30 at the radially inner free end 30a thereof, as illustrated in figure 7.

As schematically illustrated in figure 7, the first shelves 29 have a smaller radial extension than the radial extension of the second shelves 30.

All of the first connecting rods 28a have the same length and all of the second connecting rods 28b have the same length. As represented in figure 8, the first 28a and second connecting rods 28b have the same length.

The central shaft 2 is connected to telescopic rods 31 (illustrated in figures 3 and 4) that extend in the radial direction and that are connected to the second sectors 18.

Each second sector 18 is connected to a respective telescopic rod 31 which is extensible in the radial direction between a condition of minimum expansion (illustrated in figure 3) and a condition of maximum expansion (illustrated in figure 4).

The telescopic rods 31 prevent the second sectors 18 from rotating with respect to the first sectors 3 and with respect to the central shaft 2.

When the second sectors 18 and the first sectors 3 are in the respective contracted conditions, the first sectors 3 are circumferentially adjacent to one another just as the second sectors 18 are circumferentially adjacent to one another.

In this condition, the second sectors 18 are radially inside the first sectors 3 (figure 3).

In order to allow the connecting rods 28 to reach the radial position occupied by the first sectors 3 (which as stated are radially outside of the second sectors 18), when the second sectors 18 are in the contracted condition between the second ends 23 of the second sectors 18 openings 32 are defined.

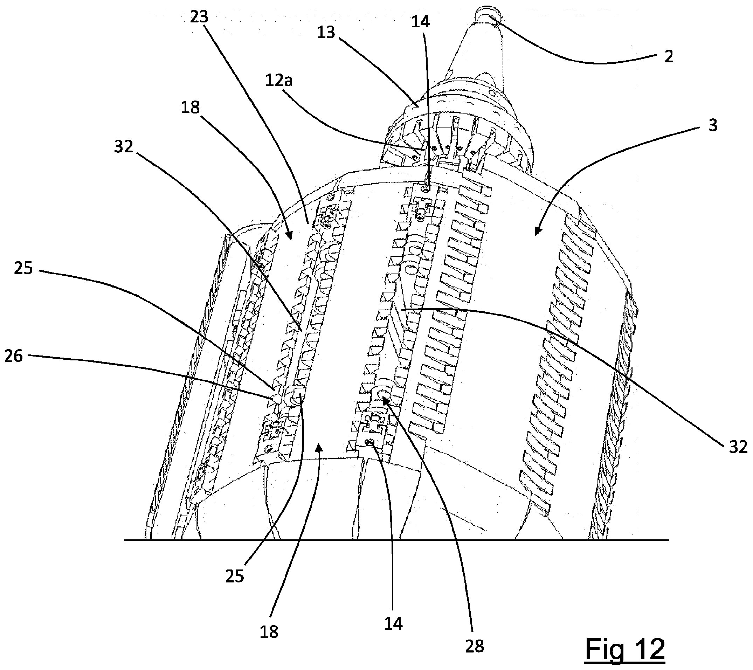

In particular, when the second sectors 18 are in the contracted condition, the second projections 25 of a second sector 18 are not inserted in the second cavities 26 of the circumferentially adjacent second sector 18, as represented in figure 12. The second projections 25 of a second sector 18 are also circumferentially spaced from the second projections 25 of the circumferentially adjacent second sector 18 by an amount such as to allow the first shelves 29 to insert into the opening 32.

Similarly, each control lever 12 crosses a respective opening 32 between the second ends 23 of the second sectors 18 (when in the contracted condition) so as to reach the respective first sectors 3.

As shown in figure 12, the sliders 14 of the control levers 12 have smaller dimensions in the circumferential direction than the dimension in the same direction of the openings 32, so as to be able to insert into the openings 32.

When the second sectors 18 and the first sectors 3 are in the respective expanded conditions, the first sectors 3 and the second sectors 18 lie the same radial distance from the central shaft 2 and are circumferentially adjacent to one another.

In particular, every first sector 3 is circumferentially adjacent to two second sectors 18 and every second sector 18 is circumferentially adjacent to two first sectors 3, as shown for example in figure 2.

In this condition, as better illustrated in figure 6, the first projections 9 of two circumferentially consecutive first sectors 3 are inserted in the second cavities 26 of a second sector 18 circumferentially arranged between the two first sectors 3 for at least 25%, preferably for about 30%, of the circumferential extension of the first projections. The second cavities 26 of the second sectors 18 are completely occupied by the first projections 9 of the first sectors 3.

The second projections 25 of two circumferentially consecutive second sectors 18 are completely inserted in the first cavities 10 of a first sector 3 circumferentially arranged between the two second sectors 18.

The radially outer surface of the first sectors 3 and of the second sectors 18 define a substantially continuous and radially outer annular surface 1a for the drum 1 when the first sectors 3 and the second sectors 18 are in the expanded condition.

In accordance with the method for controlling the geometry of a forming drum of the present invention, the drum 1 can be actuated with continuity between the contracted condition and the expanded condition (and vice-versa) of the first sectors 3 and of the second sectors 18.

When in the contracted condition, the radial dimensions of the drum 1 are minimum, suitable for example for allowing the drum to insert coaxially in a carcass sleeve of a tyre being processed.

As an example, the radial bulk of the drum 1 in this condition can be about 330 millimeters.

In this condition, as stated, the first sectors 3 are arranged radially outside of the second sectors 18 and define the radial bulk of the drum 1, as represented in figures 1 and 3.

In this condition, the radially outer annular surface 1a of the drum 1 is substantially continuous, without interruptions or openings since the first sectors 3 are adjacent to one another with the first projections 9 of a first sector 3 inserted in the first cavities 10 of the circumferentially adjacent first sectors 3.

The kinematic mechanisms 27 are arranged so that the first axes X1 are radially spaced from the second axes X2 by a maximum amount, as illustrated in figure 8. The distance measured in the radial direction that separates the first axes X1 from the second axes X2 is less than the length of a first connecting rod 28a or second connecting rod 28b. The angle at the vertex A (considering the vertex to be the second axis X2 about which a first connecting rod 28a and a second connecting rod 28b of a same pair of connecting rods 28 are hinged) formed from a first connecting rod 28a and a second connecting rod 28b of a same pair of connecting rods 28 is minimal.

Preferably, the angle at the vertex A is less than about 60°, more preferably it is about 20°.

The telescopic rods 31 are in the condition of minimum radial expansion.

By actuating the movement devices 11, the control collars 13 move axially towards one another determining a rotation of the control levers 12 and a consequent translation in the radial direction of the first sectors 3. The first sectors 3 thus translate in the radially outer direction in a synchronous manner moving away from the central shaft 2. During such a movement, the second axes X2 always remain the same distance from the respective first sector 3 and move away from the central axis 2. The second axes X2, moving away from the central axis 2 move away from one another in the circumferential direction still remaining equally angularly spaced.

The movement of the second axes X2 away from the central shaft 2 (caused by the movement of the first sectors 3) actuates the kinematic mechanism 27 that sets the second sectors 18 in motion.

In particular, the radial movement of the second axes X2 away from the central shaft 2 and the increase in the circumferential distance between the second axes X2 causes a translation in the radial direction and a simultaneous rotation of the first connecting rods 28a and second connecting rods 28b of a same pair of connecting rods 28, with consequent increase in their angle at the vertex A. This causes a movement of the first axes X1 in a radially outer direction, keeping the angular distance between the first axes X1 unchanged and increasing the circumferential distance between the first axes X1.

It should be noted that the speed with which the first axes X1 (and therefore the second sectors 18) move in the radial direction is equal to the speed with which the second axes X2 (and therefore the first sectors 3) move in the radial direction increased by a multiplication factor proportional to the cosine of half of the angle at the vertex A.

Therefore, the second sectors 18 move in radially outer direction with a greater speed than the speed with which the first sectors 3 move in a radially outer direction, since half of the angle at the vertex A is less than 90°, preferably less than about 30°, more preferably about 10°, when the first sectors 3 and the second sectors 18 are in the respective contracted conditions.

During the movement in the radially outer direction, the first sectors 3 are circumferentially spaced (as stated above) creating space for the second sectors 18 which, moving at a greater speed than the first sectors 3, tend to reach the radial position of the first sectors 3.

In particular, as the first axes X1 progressively move radially away from the central shaft 2, the angle at the vertex A increases and the speed of the second sectors 18 consequently decreases, in any case still remaining greater than the speed of radial separation of the first sectors 3.

When the first sectors 3 reach the expanded condition, the second sectors 18 have reached the same radial distance from the central shaft 2 of the first sectors 3 and are perfectly aligned with them also reaching the expanded condition (as schematically illustrated in figure 4).

It should be noted that in this condition the second axes X2 are still in a more outer radial position than the radial position reached by the first axes X1 and, therefore, the angle at the vertex A is less than 180°.

In the expanded condition, the radial dimensions of the drum 1 are the maximum, suitable for example for allowing the drum to support a carcass structure during the assembly of one or more belt layers, of the belt structure or of the crown structure to the carcass structure.

As an example, the radial bulk of the drum 1, which depends amongst other things on the thickness of the sectors, in this condition can be about 625 millimeters.

Preferably, the difference between the radial bulk of the drum 1 when the first sectors 3 and the second sectors 18 are in the expanded condition and the radial bulk of the drum 1 when the first sectors 3 and the second sectors 18 are in the contracted condition is about 160 millimeters.

Preferably, the radial bulk of the drum 1 when the first sectors 3 and the second sectors 18 are in the expanded condition is at least 1.5 times the radial bulk of the drum 1 when the first sectors 3 and the second sectors 18 are in the contracted condition.

In this condition, the radially outer annular surface 1a of the drum 1 is substantially continuous, without interruptions or openings since the first sectors 3 are circumferentially interspersed and aligned with the second sectors 18 with only a portion of the first cavities 10 not entirely occupied by the second projections 25.

In the same condition, the kinematic mechanisms 27 are arranged so that the first axes X1 are radially spaced from the second axes X2 by a minimum amount. The angle at the vertex A formed by a first connecting rod 28a and a second connecting rod 28b of a same pair of connecting rods 28 is maximum and in any case less than 180°, preferably less than about 110°, more preferably about 90°.

The telescopic rods 31 are in the condition of maximum radial expansion.

By actuating the radial movement devices 11 in the opposite direction the first sectors 3 and the second sectors 18 are brought towards the contracted condition, for example to be able to withdraw the carcass structure assembled at one or more belt layers of the belt structure or at the crown structure from the drum 1.

By actuating the movement devices 11 from the expanded conditions of the first sectors 3 and second sectors 18, the control collars 13 move axially apart determining a rotation of the control levers 12 and a consequent translation in the radially inner direction of the first sectors 3. The first sectors 3 thus start to translate in the radially inner direction in a synchronous manner moving towards the central shaft 2. At the start of such a movement, the second axes X2 tend to move towards the central axis 2 actuating the kinematic mechanism 27 that sets the second sectors 18 in motion.

In particular, the radial movement of the second axes X2 towards the central shaft 2 with consequent decrease of the circumferential distance between the first axes X1 causes a translation in the radially inner direction and a simultaneous rotation of the first connecting rods 28a and second connecting rods 28b of the same pairs of connecting rods 28 that decrease their angle at the vertex A. This causes a movement of the first axes X1 in radially inner direction, keeping the angular distance between the first axes X1 unchanged and decreasing the circumferential distance between the first axes X1.

It should be noted that the speed with which the first axes X1 (and therefore the second sectors 18) move in radially inner direction is equal to the speed with which the second axes X2 (and therefore the first sectors 3) move in radially inner direction increased by a multiplication factor proportional to the cosine of half of the angle at the vertex A.

Therefore, the second sectors 18 move in radially inner direction with a greater speed than the speed with which the first sectors 3 move in radially inner direction, since half of the angle at the vertex A is less than 90° when the first sectors 3 and the second sectors 18 are in the respective expanded conditions.

The second sectors 18 therefore go immediately radially more inside the first sectors 3, freeing the circumferential space that divides two circumferentially consecutive first sectors 3 and allowing the first sectors 3 to circumferentially approach one another.

In particular, as the first axes X1 progressively move radially towards the central shaft 2, the angle at the vertex A decreases and the speed of the second sectors 18 consequently increases, inserting the second sectors 18 ever more radially inside the first sectors 3.

When the first sectors 3 reach the contracted condition, the second sectors 18 also reach the contracted condition.

## Claims

1. Forming drum (1) for building a tyre for vehicle wheels comprising:
a central shaft (2) concentric to a geometric rotation axis (X) of the forming drum;
first sectors (3) radially mobile between a contracted condition in which said first sectors (3) are brought towards said central shaft (2) and an expanded condition in which said first sectors (3) are radially moved away from said central shaft (2);
second sectors (18) radially mobile between a contracted condition in which said second sectors (18) are brought towards said central shaft (2) and an expanded condition in which said second sectors (18) are radially moved away from said central shaft (2);
radial movement devices (11) active between said central shaft (2) and the first sectors (3) to move the first sectors (3) between the contracted condition and the expanded condition and vice-versa; said forming drum being **characterised by** kinematic mechanisms (27) active between said first sectors (3) and said second sectors (18) that kinematically connect the first sectors (3) and the second sectors (18) to radially move the second sectors (18) between the contracted condition and the expanded condition when the first sectors (3) move radially between the contracted condition and the expanded condition and to move the second sectors (18) between the expanded condition and the contracted condition when the first sectors (3) move between the expanded condition and the contracted condition;
wherein said first sectors (3) and said second sectors (18) are circumferentially aligned when said first sectors (3) and second sectors (18) are in the respective expanded conditions to define a substantially continuous annular surface (1a) and wherein said second sectors (18) are radially inner with respect to said first sectors (3) when said first sectors (3) and second sectors (18) are in the respective contracted conditions.

2. Drum (1) according to claim 1, wherein said kinematic mechanisms (27) move said second sectors (3) from the expanded condition to the contracted condition at a greater radial speed than a radial speed at which said moving devices (11) move said first sectors (3) from the expanded condition to the contracted condition.

3. Drum (1) according to claim 1 or 2, wherein said kinematic mechanisms (27) move said second sectors (18) from the contracted condition to the expanded condition at a greater radial speed than a radial speed at which said moving devices (11) move said first sectors (3) from the contracted condition to the expanded condition.

4. Drum (1) according to any one of the preceding claims, wherein said kinematic mechanisms (27) comprise first axes (X1) and second axes (X2) oriented in an axial direction, for each second sector (18) being defined a respective first axis (X1) and for each first sector (3) being defined a respective second axis (X2); said first axes (X1) translating radially with respect to said first sectors (3) and always remaining at the same radial distance from the respective second sector (18) and said second axes (X2) always remaining at the same radial distance from the respective first sector (3) and always remaining radially external with respect to said first axes (X1) when said moving devices (11) move said first sectors (3).

5. Drum (1) according to any one of the preceding claims, wherein said kinematic mechanisms (27) connect each second sector (18) to respective two first sectors (3) circumferentially consecutive to one another.

6. Drum (1) according to any one of the preceding claims, wherein said kinematic mechanisms (27) comprise pairs of connecting rods (28) wherein a first connecting rod (28a) and a second connecting rod (28b) of each pair of connecting rods (28) are hinged together and each hinged to a respective first sector (3) and wherein each second sector (18) is hinged to a first connecting rod (28a) of a pair of connecting rods (28) and to a second connecting rod (28b) of a circumferentially consecutive pair of connecting rods (28).

7. Drum (1) according to claims 4 and 6, wherein a first connecting rod (28a) of a pair of connecting rods (28) and a second connecting rod (28b) of a circumferentially consecutive pair of connecting rods (28) are hinged together around a respective first axis (X1), and wherein the first connecting rod (28a) and the second connecting rod (28b) of a same pair of connecting rods (28) are hinged to a first sector (3) around a respective second axis (X2).

8. Drum (1) according to any one of the preceding claims, wherein each first sector (3) comprises first circumferentially opposite ends (7) provided with first projections (9) alternating with first cavities (10); the first projections (9) of a first sector (3) being inserted in the first cavities (10) of circumferentially adjacent first sectors (3) when the first sectors (3) and the second sectors (18) are in the contracted condition.

9. Drum (1) according to any one of the preceding claims, wherein each second sector (18) comprises second circumferentially opposite ends (23) provided with second projections (25) alternating with second cavities (26); the second projections (25) of a second sector (18) being away from the second cavities (26) of circumferentially adjacent second sectors (18) when the first sectors (3) and the second sectors (18) are in the contracted condition.

10. Drum (1) according to any one of the preceding claims, wherein said radial movement devices (11) comprise control levers (12) each hinged to one of said first sectors (3) and to at least one control collar (13) associated with said control levers (12) and slidably fitted on said central shaft (2).

11. Method for controlling the geometry of a forming drum (1) in a process for building a tyre for vehicle wheels comprising:
providing radially mobile first sectors (3);
providing radially mobile second sectors (18);
kinematically connecting the second sectors (18) to the first sectors (3);
providing radial movement devices (11) and kinematically linking said radial movement devices (11) to the first sectors (3);
activating said radial movement devices (11) to move said first sectors (3) between a contracted condition in which they have a minimum radial bulk and an expanded condition in which they have a maximum radial bulk and vice-versa;
wherein the movement of said first sectors (3) sets said second sectors (18) in motion between a contracted condition in which said second sectors (18) are radially inner with respect to said first sectors (3) and an expanded condition in which said second sectors (18) are circumferentially aligned with said first sectors (3).

12. Method according to claim 11, wherein said second sectors (18) are in the contracted condition when the first sectors (3) are in the contracted condition and in which said second sectors (18) are in the expanded condition when the first sectors (3) are in the expanded condition.

13. Method according to claim 11 or 12, wherein said second sectors (18) move from the expanded condition to the contracted condition at a greater radial speed than a radial speed at which said moving devices (11) move said first sectors (3) from the expanded condition to the contracted condition.

14. Method according to any one of claims 11 to 13, wherein said second sectors (18) move from the contracted condition to the expanded condition at a greater radial speed than a radial speed at which said moving devices (11) move said first sectors (18) from the contracted condition to the expanded condition.

15. Method according to any one of claims 11 to 14, wherein providing said first sectors (3) comprises providing, on first circumferentially opposite ends (7) of each first sector (3), first projections (9) alternating with first cavities (10), and wherein providing said second sectors (18) comprises providing, on second circumferentially opposite ends (23) of each second sector (18), second projections (25) alternating with second cavities (26); the method comprising inserting the first projections (9) of a first sector (3) in the first cavities (10) of circumferentially adjacent first sectors (3) when the first sectors (3) are in the contracted condition.

## Patentansprüche

1. Formtrommel (1) zum Aufbau eines Reifens für Fahrzeugräder, umfassend: eine zentrale Welle (2) konzentrisch zu einer geometrischen Rotationsachse (X) der Formtrommel;
erste Sektoren (3), die radial beweglich sind zwischen einem kontrahierten Zustand, in dem die ersten Sektoren (3) zu der zentralen Welle (2) gebracht werden, und einem expandierten Zustand, in dem die ersten Sektoren (3) radial von der zentralen Welle (2) wegbewegt werden); zweite Sektoren (18), die radial beweglich sind zwischen einem kontrahierten Zustand, in dem die zweiten Sektoren (18) zu der zentralen Welle (2) gebracht werden, und einem expandierten Zustand, in dem die zweiten Sektoren (18) radial von der zentralen Welle (2) wegbewegt werden; Radialbewegungsvorrichtungen (11), die zwischen der zentralen Welle (2) und den ersten Sektoren (3) aktiv sind, um die ersten Sektoren (3) zwischen dem kontrahierten Zustand und dem expandierten Zustand und umgekehrt zu bewegen;
wobei die Formtrommel dadurch charakterisiert ist, dass kinematische Mechanismen (27), die zwischen den ersten Sektoren (3) und den zweiten Sektoren (18) aktiv sind und die ersten Sektoren (3) und die zweiten Sektoren (18) kinematisch verbinden, um die zweiten Sektoren (18) radial zwischen dem kontrahierten Zustand und dem expandierten Zustand zu bewegen, wenn sich die ersten Sektoren (3) radial zwischen dem kontrahierten Zustand und dem expandierten Zustand bewegen, und um die zweiten Sektoren (18) zwischen dem expandierten Zustand und dem kontrahierten Zustand zu bewegen, wenn sich die ersten Sektoren (3) zwischen dem expandierten Zustand und dem kontrahierten Zustand bewegen;
wobei die ersten Sektoren (3) und die zweiten Sektoren (18) in Umfangsrichtung ausgerichtet sind, wenn sich die ersten Sektoren (3) und die zweiten Sektoren (18) in den jeweiligen expandierten Zuständen befinden, um eine im Wesentlichen kontinuierliche ringförmige Oberfläche (1a) zu definieren, und wobei die zweiten Sektoren (18) in Bezug auf die ersten Sektoren (3) radial innen liegen, wenn sich die ersten Sektoren (3) und die zweiten Sektoren (18) in den jeweiligen kontrahierten Zuständen befinden.

2. Trommel (1) nach Anspruch 1, wobei die kinematischen Mechanismen (27) die zweiten Sektoren (3) aus dem expandierten Zustand in den kontrahierten Zustand mit einer größeren Radialgeschwindigkeit bewegen als eine Radialgeschwindigkeit, mit der die Bewegungsvorrichtungen (11) die ersten Sektoren (3) aus dem expandierten Zustand in den kontrahierten Zustand bewegen.

3. Trommel (1) nach Anspruch 1 oder 2, wobei die kinematischen Mechanismen (27) die zweiten Sektoren (18) aus dem kontrahierten Zustand in den expandierten Zustand mit einer größeren Radialgeschwindigkeit bewegen als eine Radialgeschwindigkeit, mit der die Bewegungsvorrichtungen (11) die ersten Sektoren (3) aus dem kontrahierten Zustand in den expandierten Zustand bewegen.

4. Trommel (1) nach einem der vorhergehenden Ansprüche, wobei die kinematischen Mechanismen (27) erste Achsen (X1) und zweite Achsen (X2) umfassen, die in einer axialen Richtung orientiert sind, wobei für jeden zweiten Sektor (18) eine entsprechende erste Achse (X1) und für jeden ersten Sektor (3) eine entsprechende zweite Achse (X2) definiert ist; wobei die ersten Achsen (X1) sich radial in Bezug auf die ersten Sektoren (3) verschieben und immer im gleichen radialen Abstand von dem jeweiligen zweiten Sektor (18) bleiben und die zweiten Achsen (X2) immer im gleichen radialen Abstand von dem jeweiligen ersten Sektor (3) und immer radial außerhalb in Bezug auf die ersten Achsen (X1) bleiben, wenn die Bewegungsvorrichtungen (11) die ersten Sektoren (3) bewegen.

5. Trommel (1) nach einem der vorhergehenden Ansprüche, wobei die kinematischen Mechanismen (27) jeden zweiten Sektor (18) mit entsprechenden zwei ersten Sektoren (3) verbinden, die in Umfangsrichtung aufeinander folgen.

6. Trommel (1) nach einem der vorhergehenden Ansprüche, wobei die kinematischen Mechanismen (27) Paare von Pleuelstangen (28) umfassen, wobei eine erste Pleuelstange (28a) und eine zweite Pleuelstange (28b) jedes Paars von Pleuelstangen (28) gelenkig miteinander verbunden und jeweils an einem entsprechenden ersten Sektor (3) drehbar angebracht sind und wobei jeder zweite Sektor (18) an einer ersten Pleuelstange (28a) eines Paars Pleuelstangen (28) und an einer zweiten Pleuelstange drehbar (28b) an einem in Umfangsrichtung aufeinanderfolgenden Pleuelpaar (28) angebracht ist.

7. Trommel (1) nach den Ansprüchen 4 und 6, wobei eine erste Pleuelstange (28a) eines Pleuelpaares (28) und eine zweite Pleuelstange (28b) eines in Umfangsrichtung aufeinanderfolgenden Pleuelpaares (28) gelenkig miteinander um eine jeweilige erste Achse (X1) verbunden sind, und wobei die erste Pleuelstange (28a) und die zweite Pleuelstange (28b) eines gleichen Pleuelpaars (28) an einem ersten Sektor (3) um eine jeweilige zweite Achse drehbar angebracht sind (X2).

8. Trommel (1) nach einem der vorhergehenden Ansprüche, wobei jeder erste Sektor (3) erste in Umfangsrichtung gegenüberliegende Enden (7) umfasst, welche erste Vorsprünge (9) abwechselnd mit ersten Hohlräumen (10) angeordnet haben; wobei die ersten Vorsprünge (9) eines ersten Sektors (3) in die ersten Hohlräume (10) von in Umfangsrichtung benachbarten ersten Sektoren (3) eingeführt werden, wenn sich die ersten Sektoren (3) und die zweiten Sektoren (18) im kontrahierten Zustand befinden.

9. Trommel (1) nach einem der vorhergehenden Ansprüche, wobei jeder zweite Sektor (18) zweite in Umfangsrichtung gegenüberliegende Enden (23) umfasst, welche zweite Vorsprünge (25) abwechselnd mit zweiten Hohlräumen (26) angeordnet haben; wobei die zweiten Vorsprünge (25) eines zweiten Sektors (18) von den zweiten Hohlräumen (26) in Umfangsrichtung benachbarter zweiter Sektoren (18) entfernt sind, wenn sich die ersten Sektoren (3) und die zweiten Sektoren (18) im kontrahierten Zustand befinden.

10. Trommel (1) nach einem der vorangehenden Ansprüche, wobei die Radialbewegungsvorrichtungen (11) Steuerhebel (12) umfassen, die jeweils an einem der ersten Sektoren (3) und an mindestens einer zugeordneten Steuermanschette (13) angelenkt sind, der mit den Steuerhebeln (12) verbunden und verschiebbar auf der zentralen Welle (2) angeordnet sind.

11. Verfahren zur Steuerung der Geometrie einer Formtrommel (1) in einem Verfahren zur Herstellung eines Reifens für Fahrzeugräder, umfassend:
Bereitstellen von radial beweglichen ersten Sektoren (3) ;
Bereitstellen von radial beweglichen zweiten Sektoren (18) ;
kinematisches Verbinden der zweiten Sektoren (18) mit den ersten Sektoren (3);
Bereitstellen von Radialbewegungsvorrichtungen (11) und kinematisches Verbinden dieser Radialbewegungsvorrichtungen (11) mit den ersten Sektoren (3);
Aktivieren der Radialbewegungsvorrichtungen (11), um die ersten Sektoren (3) zwischen einem kontrahierten Zustand, in dem sie eine minimale radiale Masse haben, und einem expandierten Zustand, in dem sie eine maximale radiale Masse haben, und umgekehrt zu bewegen;
wobei die Bewegung der ersten Sektoren (3) die zweiten Sektoren (18) in Bewegung zwischen einem kontrahierten Zustand versetzt, in dem die zweiten Sektoren (18) in Bezug auf die ersten Sektoren (3) radial innen liegen, und einem expandierten Zustand, in dem die zweiten Sektoren (18) in Umfangsrichtung mit den ersten Sektoren (3) ausgerichtet sind.

12. Verfahren nach Anspruch 11, wobei die zweiten Sektoren (18) im kontrahierten Zustand sind, wenn die ersten Sektoren (3) im kontrahierten Zustand sind, und in dem die zweiten Sektoren (18) im expandierten Zustand sind, wenn die ersten Sektoren (3) im expandierten Zustand sind.

13. Verfahren nach Anspruch 11 oder 12, wobei sich die zweiten Sektoren (18) aus dem expandierten Zustand in den kontrahierten Zustand mit einer größeren Radialgeschwindigkeit bewegen als eine Radialgeschwindigkeit, mit der die Bewegungsvorrichtungen (11) die ersten Sektoren (3) aus dem expandierten Zustand in den kontrahierten Zustand bewegen.

14. Verfahren nach einem der Ansprüche 11 bis 13, wobei sich die zweiten Sektoren (18) aus dem kontrahierten Zustand in den expandierten Zustand mit einer größeren Radialgeschwindigkeit bewegen als eine Radialgeschwindigkeit, mit der die Bewegungsvorrichtungen (11) die ersten Sektoren (18) aus dem kontrahierten Zustand in den expandierten Zustand bewegen.

15. Verfahren nach einem der Ansprüche 11 bis 14, wobei das Bereitstellen der ersten Sektoren (3) das Bereitstellen erster Vorsprünge (9) alternierend mit ersten Hohlräumen (10) an ersten in Umfangsrichtung gegenüberliegenden Enden (7) jedes ersten Sektors (3) umfasst, und wobei das Bereitstellen der zweiten Sektoren (18) das Bereitstellen von zweiten Vorsprüngen (25) alternierend mit zweiten Hohlräumen (26) an zweiten in Umfangsrichtung gegenüberliegenden Enden (23) jedes zweiten Sektors (18) umfasst; wobei das Verfahren das Einführen der ersten Vorsprünge (9) eines ersten Sektors (3) in die ersten Hohlräume (10) von in Umfangsrichtung benachbarten ersten Sektoren (3) umfasst, wenn sich die ersten Sektoren (3) in dem kontrahierten Zustand befinden.

## Revendications

1. Tambour (1) de formage destiné à la construction d'un pneu pour roues de véhicule comprenant :
un arbre (2) central concentrique à un axe de rotation (X) géométrique du tambour de formage ;
des premiers secteurs (3) mobiles radialement entre un état contracté, dans lequel lesdits premiers secteurs (3) sont amenés vers ledit arbre (2) central, et un état dilaté, dans lequel lesdits premiers secteurs (3) sont écartés radialement dudit arbre (2) central ;
des seconds secteurs (18) mobiles radialement entre un état contracté, dans lequel lesdits seconds secteurs (18) sont amenés vers ledit arbre (2) central, et un état dilaté, dans lequel lesdits seconds secteurs (18) sont écartés radialement dudit arbre (2) central ;
des dispositifs de déplacement radial (11) actifs entre ledit arbre (2) central et lesdits premiers secteurs (3) pour déplacer lesdits premiers secteurs (3) entre l'état contracté et l'état dilaté et vice-versa ;
ledit tambour de formage étant **caractérisé par** des mécanismes (27) cinématiques actifs entre lesdits premiers secteurs (3) et lesdits seconds secteurs (18), lesquels sont en connexion cinématique avec lesdits premiers secteurs (3) et lesdits seconds secteurs (18) pour déplacer radialement lesdits seconds secteurs (18) entre l'état contracté et l'état dilaté lorsque lesdits premiers secteurs (3) se déplacent radialement entre l'état contracté et l'état dilaté et pour déplacer lesdits seconds secteurs (18) entre l'état dilaté et l'état contracté lorsque lesdits premiers secteurs (3) se déplacent entre l'état dilaté et l'état contracté ;
dans lequel lesdits premiers secteurs (3) et lesdits seconds secteurs (18) sont alignés de manière circonférentielle lorsque lesdits premiers secteurs (3) et lesdits seconds secteurs (18) sont dans les états dilatés respectifs pour définir une surface (1a) annulaire sensiblement continue, et dans lequel lesdits seconds secteurs (18) sont radialement intérieurs par rapport auxdits premiers secteurs (3) lorsque lesdits premiers secteurs (3) et lesdits seconds secteurs (18) sont dans les états contractés respectifs.

2. Tambour (1) selon la revendication 1, dans lequel lesdits mécanismes (27) cinématiques déplacent lesdits seconds secteurs (3) de l'état dilaté à l'état contracté à une vitesse radiale supérieure à une vitesse radiale à laquelle lesdits dispositifs de déplacement (11) déplacent lesdits premiers secteurs (3) de l'état dilaté à l'état contracté.

3. Tambour (1) selon la revendication 1 ou 2, dans lequel lesdits mécanismes (27) cinématiques déplacent lesdits seconds secteurs (18) de l'état contracté à l'état dilaté à une vitesse radiale supérieure à une vitesse radiale à laquelle lesdits dispositifs de déplacement (11) déplacent lesdits premiers secteurs (3) de l'état contracté à l'état dilaté.

4. Tambour (1) selon l'une quelconque des revendications précédentes, dans lequel lesdits mécanismes (27) cinématiques comprennent des premiers axes (X1) et des seconds axes (X2) orientés dans une direction axiale, pour chaque second secteur (18) un premier axe (X1) respectif étant défini et pour chaque premier secteur (3) un second axe (X2) respectif étant défini ; lesdits premiers axes (X1) se déplaçant radialement par rapport auxdits premiers secteurs (3) et restent toujours à la même distance radiale du second secteur (18) respectif et lesdits seconds axes (X2) restent toujours à la même distance radiale du premier secteur (3) respectif et restent toujours radialement extérieurs par rapport auxdits premiers axes (X1) lorsque lesdits dispositifs de déplacement (11) déplacent lesdits premiers secteurs (3).

5. Tambour (1) selon l'une quelconque des revendications précédentes, dans lequel lesdits mécanismes (27) cinématiques connectent chaque second secteur (18) à deux premiers secteurs (3) respectifs circonférentiellement consécutifs l'un à l'autre.

6. Tambour (1) selon l'une quelconque des revendications précédentes, dans lequel lesdits mécanismes (27) cinématiques comprennent des paires de bielles (28), dans lequel une première bielle (28a) et une seconde bielle (28b) de chaque paire de bielles (28) sont articulées ensemble et chacune est articulée à un premier secteur (3) respectif, et dans lequel chaque second secteur (18) est articulé à une première bielle (28a) d'une paire de bielles (28) et à une seconde bielle (28b) d'une paire circonférentiellement consécutive de bielles (28).

7. Tambour (1) selon les revendications 4 et 6, dans lequel une première bielle (28a) d'une paire de bielles (28) et une seconde bielle (28b) d'une paire circonférentiellement consécutive de bielles (28) sont articulées ensemble autour d'un premier axe (X1) respectif, et dans lequel la première bielle (28a) et la seconde bielle (28b) d'une même paire de bielles (28) sont articulées à un premier secteur (3) autour d'un second axe (X2) respectif.

8. Tambour (1) selon l'une quelconque des revendications précédentes, dans lequel chaque premier secteur (3) comprend des premières extrémités (7) circonférentiellement opposées pourvues de premières saillies (9) alternant des premières cavités (10) ; les premières saillies (9) d'un premier secteur (3) étant insérées dans les premières cavités (10) des premiers secteurs (3) circonférentiellement adjacents lorsque lesdits premiers secteurs (3) et lesdits seconds secteurs (18) sont à l'état contracté.

9. Tambour (1) selon l'une quelconque des revendications précédentes, dans lequel chaque second secteur (18) comprend des secondes extrémités (23) circonférentiellement opposées pourvues de secondes saillies (25) alternant des secondes cavités (26) ; les secondes saillies (25) d'un second secteur (18) étant écartées des secondes cavités (26) des seconds secteurs (18) circonférentiellement adjacents lorsque lesdits premiers secteurs (3) et lesdits seconds secteurs (18) sont à l'état contracté.

10. Tambour (1) selon l'une quelconque des revendications précédentes, dans lequel lesdits dispositifs de déplacement radial (11) comprennent des leviers de vérification (12), chacun articulé à l'un desdits premiers secteurs (3) et à au moins un collier de vérification (13) associé auxdits leviers de vérification (12) et monté coulissant sur ledit arbre (2) central.

11. Procédé de vérification de la géométrie d'un tambour (1) de formage dans un procédé de construction d'un pneu pour roues de véhicule comprenant :
la fourniture des premiers secteurs (3) radialement mobiles ;
la fourniture des seconds secteurs (18) radialement mobiles ;
la connexion cinématique desdits seconds secteurs (18) auxdits premiers secteurs (3) ;
la fourniture des dispositifs de déplacement radial (11) et la liaison cinématique desdits dispositifs de déplacement radial (11) aux premiers secteurs (3) ;
l'activation desdits dispositifs de déplacement radial (11) pour déplacer lesdits premiers secteurs (3) entre l'état contracté dans lequel ils présentent un encombrement radial minimal et un état dilaté dans lequel ils présentent un encombrement radial maximal et vice-versa ; dans lequel le mouvement desdits premiers secteurs (3) met lesdits seconds secteurs (18) en mouvement entre un état contracté, dans lequel lesdits seconds secteurs (18) sont radialement intérieurs par rapport auxdits premiers secteurs (3), et un état dilaté, dans lequel lesdits seconds secteurs (18) sont alignés circonférentiellement avec lesdits premiers secteurs (3).

12. Procédé selon la revendication 11, dans lequel lesdits seconds secteurs (18) sont à l'état contracté lorsque lesdits premiers secteurs (3) sont à l'état contracté et dans lequel lesdits seconds secteurs (18) sont à l'état dilaté lorsque lesdits premiers secteurs (3) sont à l'état dilaté.

13. Procédé selon la revendication 11 ou 12, dans lequel lesdits seconds secteurs (18) se déplacent de l'état dilaté à l'état contracté à une vitesse radiale supérieure à une vitesse radiale à laquelle lesdits dispositifs de déplacement (11) déplacent lesdits premiers secteurs (3) de l'état dilaté à l'état contracté.

14. Procédé selon l'une quelconque des revendications 11 à 13, dans lequel lesdits seconds secteurs (18) se déplacent de l'état contracté à l'état dilaté à une vitesse radiale supérieure à une vitesse radiale à laquelle lesdits dispositifs de déplacement (11) déplacent lesdits premiers secteurs (18) de l'état contracté à l'état dilaté.

15. Procédé selon l'une quelconque des revendications 11 à 14, dans lequel la fourniture desdits premiers secteurs (3) comprend la fourniture, sur les premières extrémités (7) circonférentiellement opposées de chaque premier secteur (3), des premières saillies (9) alternant les premières cavités (10), et dans lequel la fourniture desdits seconds secteurs (18) comprend la fourniture, sur les secondes extrémités (23) circonférentiellement opposées de chaque second secteur (18), des secondes saillies (25) alternant les secondes cavités (26) ; le procédé comprenant l'insertion des premières saillies (9) du premier secteur (3) dans les premières cavités (10) des premiers secteurs (3) circonférentiellement adjacents lorsque lesdits premiers secteurs (3) sont dans l'état contracté.
